# EUROPEAN PATENT APPLICATION

(11) **EP 1 722 372 A2**
(43) Date of publication of application: **15.11.2006**
(21) Application number: 06009532.0
(22) Date of filing: 09.05.2006
(51) Int. Cl.: G11B 27/34, G11B 27/10

(54) **Method for displaying image data in portable terminal**

(30) Priority: 12.05.2005 KR 20050039787
(71) Applicant: Samsung Electronics Co., Ltd., Suwon-si, Gyeonggi-Do (KR)
(72) Inventor: Lee, Moon-Heui, Yeongtong-gu Suwon-si Gyeonggi-do (KR)
(74) Representative: Lang, Johannes

(57) **Abstract**

A method for displaying image data in a portable terminal is provided, in which the type of a moving picture is displayed by using previously stored item display data. The method includes photographing a moving picture in a moving picture photographing mode and adding one of frames of the photographed moving picture as item display data to the photographed moving picture and storing the photographed moving picture, if moving picture storage is selected during photographing.

## Description

### BACKGROUND OF THE INVENTION

### Field of the Invention:

The present invention generally relates to a method for displaying image data in a portable terminal. In particular, the present invention relates to a method for displaying image data in a portable terminal, in which the type of a moving picture is displayed by using previously stored item display data.

### Description of the Related Art:

Currently, portable mobile communication terminals are evolving into terminals having structures capable of performing high speed data communication in addition to voice communication. Data processed in data communication by the portable terminals may comprise packet data and image data.

Currently, portable terminals have image data transmission/reception functions, and therefore store image screens received from a base station or transmit acquired image screens to a base station. The portable terminals may be equipped with cameras for photographing image screens and display units for displaying the photographed image screens. The cameras may comprise Charge Coupled Devices (CCD) sensors or Complementary Metal-Oxide-Semiconductor (CMOS) sensors and the display units may comprise Liquid Crystal Displays (LCD). With the miniaturization of camera devices, the sizes of cameras for photographing images also decrease. The portable terminals photograph image screens and may display the photographed image screens as moving pictures and still pictures or transmit the photographed image screens to a base station.

The portable terminals may also comprise camera module units for processing high-resolution image data to process and store high-resolution image data as processed in general digital cameras. In the portable terminals comprising the camera module units, the camera module units process photographed image data at high resolution, store the processed image data in their memories, and reproduce the processed image data. When a moving picture album viewing function of the portable terminal is selected to view a moving picture stored in the memory of the camera module unit, the display unit displays the type of a stored moving picture as a thumb nail.

However, a process of displaying the type of the stored moving picture as thumb nails is performed by a controller of the portable terminal. Thus, when the controller has a low-resolution image data processing capability, it cannot process moving pictures stored in the memory of the camera module unit for processing high-resolution image data. As a result, upon selection of a moving picture album viewing function, thumb-nail image data for showing the type of the stored moving picture is not displayed.

### SUMMARY OF THE INVENTION

Therefore, an object of the present invention is to provide a method for displaying image data in a portable terminal, in which the type of a moving picture is displayed by using previously stored item display data.

According to one aspect of the present invention, a method for displaying image data in a portable terminal is provided. The method comprises photographing a moving picture in a moving picture photographing mode and adding one of frames of the photographed moving picture as item display data to the photographed moving picture and storing the photographed moving picture, if moving picture storage is selected during photographing.

According to another aspect of the present invention, a method for displaying image data in a portable terminal is provided. The method comprises photographing a moving picture in a moving picture photographing mode, displaying frames of the photographed moving picture as still picture if moving picture storage is selected during photographing, adding at least one still picture selected among the displayed still pictures as item display data to the photographed moving picture and then storing the photographed moving picture.

According to a further aspect of the present invention, a method for displaying image data in a portable terminal is provided. The method comprises extracting item display data from the format of a stored moving picture if moving picture album viewing is selected, and displaying the types of stored moving pictures by using the extracted item display data.

### BRIEF DESCRIPTION OF THE DRAWINGS

The above and other objects, features, and advantages of a certain exemplary embodiment of the present invention will be more apparent from the following description taken in conjunction with the accompanying drawings, in which:
FIG. 1 is a block diagram of a portable terminal according to an exemplary embodiment of the present invention;
FIG. 2 is a flowchart illustrating a process of storing a moving picture in the portable terminal according to an exemplary embodiment of the present invention;
FIGs. 3A and 3B are flowcharts illustrating a process of displaying the type of a stored moving picture in the portable terminal according to an exemplary embodiment of the present invention; and
FIG. 4 is a diagram illustrating the format of a moving picture stored in FIG. 2 according to an exemplary embodiment of the present invention.

Throughout the drawings, like reference numerals will be understood to refer to like parts, components and structures.

### DETAILED DESCRIPTION OF EXEMPLARY EMBODIMENTS

The matters defined in the description such as a detailed construction and elements are provided to assist in a comprehensive understanding of an exemplary embodiment of the invention. Accordingly, those of ordinary skill in the art will recognize that various changes and modifications of the embodiment described herein can be made without departing from the scope and spirit of the invention. Also, descriptions of well-known functions and constructions are omitted for clarity and conciseness.

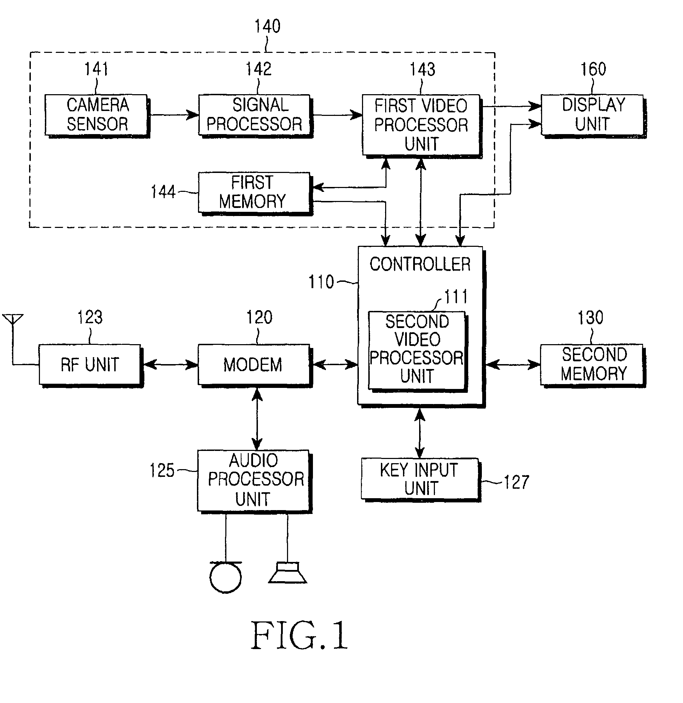

FIG. 1 is a block diagram of a portable terminal according to an exemplary embodiment of the present invention, in which the portable terminal comprises a camera.

Referring to FIG. 1, a Radio-Frequency (RF) unit 123 performs communication for the portable terminal. The RF unit 123 comprises an RF transmitter for up-converting a frequency of a transmission signal and amplifying the up-converted transmission signal and an RF receiver for low-noise-amplifying a received signal and down-converting a frequency of the low-noise-amplified signal. A modem 120 comprises a transmitter for encoding and modulating the transmission signal and a receiver for decoding and demodulating the received signal. An audio processor unit 125 may comprise a codec including a data codec processing packet data and an audio codec processing an audio signal. The audio processor unit 125 converts a digital audio signal received from the modem 120 into an analog signal through the audio codec for reproduction or converts a transmission analog audio signal generated by a microphone into a digital audio signal through the audio codec for transmission to the modem 120. The codec may be separately provided or may be included in the controller 110.

A second memory 130 may comprise program memories and data memories. The program memories can store programs for controlling general operations of the portable terminal and programs for displaying the type of a moving picture by using item display data added to the moving picture. The data memories temporarily store data generated during execution of the programs.

A controller 110 controls the overall operation of the portable terminal. The controller 110 may comprise the modem 120 and the codec. According to an exemplary embodiment of the present invention, upon selection of moving picture album viewing function, the controller 110 performs controlling operations to extract item display data from a moving picture stored in a first memory 144 and display the extracted item display data. The controller 110 may comprise a second video processor unit 111 for decoding the extracted item display data and displaying the decoded item display data on the display unit 160.

A camera module unit 140 comprises a camera sensor 141 for photographing image data and converting a photographed optical signal into an electric signal, a signal processor 142 for converting an analog image signal photographed by the camera sensor 141 into digital data, a first video processor unit 143, and the first memory 144 for storing the photographed image data.

The camera sensor 141 may comprise a Charge Coupled Device (CCD) sensor and the signal processor 142 may comprise a digital signal processor (DSP). The camera sensor 141 and the signal processor 142 may be integrated as one body or be separately provided.

The first video processor unit 143 generates screen data for displaying an image signal output from the signal processor 142. The first video processor unit 143 processes an image signal output from the signal processor 142 by the frame unit and outputs frame image data suitably for the characteristic and the size of the display unit 160. The first video processor unit 143 comprises a video codec and compresses frame image data displayed on the display unit 160 according to a predetermined compression method or reconstructs compressed frame image data into original frame image data. The video codec may comprise JPEG codec, MPEG-4 codec, or Wavelet codec. According to an exemplary embodiment of the present invention, the first video processor unit 143 compresses frame image data into a moving picture having item display data added thereto and stores the moving picture in the first memory 144. The first memory 144 stores image data output from the first video processor unit 143, in other words, moving pictures and still pictures.

The display unit 160 displays an image signal output from the first video processor unit 143 on a screen and displays user data output from the controller 110. Here, the display unit 160 may comprise a liquid crystal display (LCD), and if so, the display unit 160 may comprise an LCD controller, a memory for storing image data, and an LCD display device. When the LCD is implemented with a touch screen, the display unit 160 may also serve as an input unit. The display unit 160 may display the type of a moving picture stored in the first memory 144 as thumb-nail image data. A key input unit 127 comprises alphanumeric keys for inputting number and character information and function keys for setting various functions.

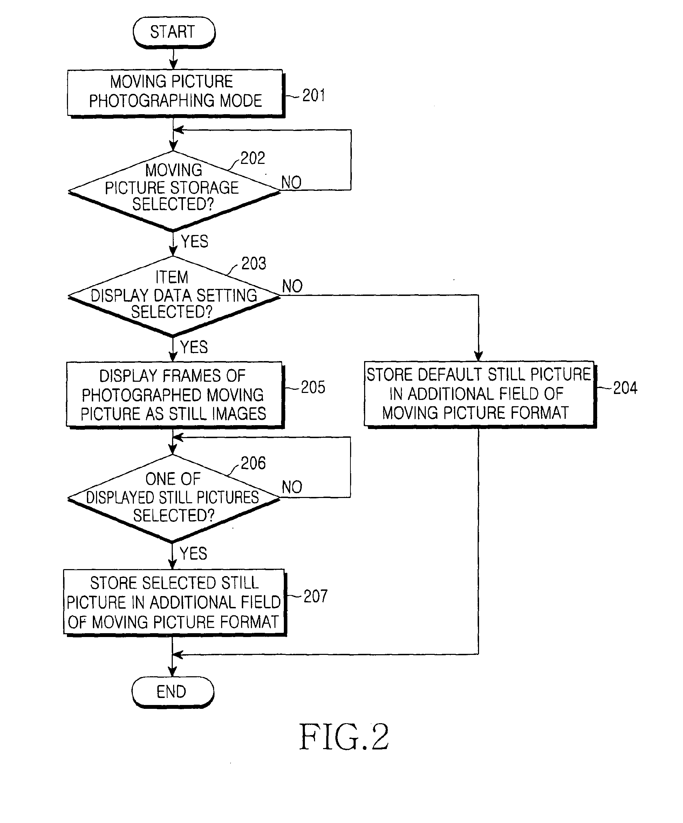

A process of storing a moving picture having item display data added thereto and a process of displaying the type of the moving picture by using the item display data will be described in greater detail with reference to FIGs. 2 through 3B. In an exemplary embodiment of the present invention, the item display data is assumed to be a still picture.

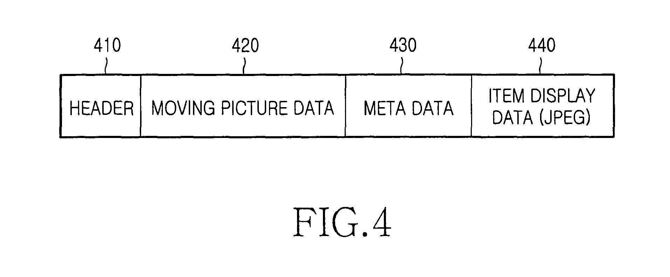

FIG. 2 is a flowchart illustrating a process of storing moving pictures in the portable terminal according to an exemplary embodiment of the present invention. FIG. 4 is a diagram illustrating the format of a moving picture stored in FIG. 2.

Referring to FIG. 2, upon a moving picture photographing function being selected in the portable terminal, the controller 110 detects the selection and switches a mode of the portable terminal to a moving picture photographing mode in step 201.

When the mode of the portable terminal is switched to the moving picture photographing mode, the camera sensor 141 of the camera module unit 140 converts a photographed optical signal into an electric signal and the signal processor 142 converts an analog image signal photographed by the camera sensor 141 into digital image data. The first video processor unit 143 processes an image signal output from the signal processor 142 by the frame unit and outputs frame image data suitably for the characteristic and the size of the display unit 160.

When moving picture storage is selected during photographing of the moving picture in the moving picture photographing mode in step 202, the controller 110 detects the selection and determines whether item display data setting is selected in step 203. If item display data setting is not selected in step 203, the controller 110 detects the non-selection and transmits a storage signal indicating additional storage of default item display data of the camera module unit 140. The first video processor unit 143 of the camera module unit 140 receiving the storage signal adds the default item display data to photographed moving picture data and compresses and stores the photographed moving picture data in the first memory 144 in step 204.

The first video processor unit 143 adds an additional field at the end of the last field of the format of a moving picture and stores the default item display data in the additional field in step 204. The default item display data is stored as a still picture in the first frame or the last frame of a photographed moving picture and the still picture may be stored as thumb-nail image data.

However, if item display data setting is selected in step 203, the controller 110 detects the selection and transmits a display signal indicating the display of frames of a photographed moving picture as still pictures. The first video processor unit 143 of the camera module unit 140 displays the frames of the photographed moving picture as still pictures on the display unit 160 in step 205. If at least one of the displayed still pictures is selected to be added as item display data in step 206, the controller 110 detects the selection and informs the camera module unit 140 of the selection. The first video processor unit 143 of the camera module unit 140 adds the selected still picture as item display data and compresses and then stores the photographed moving picture in step 207.

The first video processor unit 143 configures an additional field at the end of the last field of the format of a moving picture and stores the selected still picture that is the item display data in step 207. The selected still picture may be stored as thumb-nail image data.

FIG. 4 is a diagram illustrating the format of a moving picture stored in steps 204 and 207. As illustrated in FIG. 4, the format of a moving picture comprises a first field 410 for storing header information indicating basic information about a stored moving picture, a second field 420 for storing photographed image data, a third field 420 for storing meta data indicating position information, and a fourth field 440 that is an additional field for storing at least one item display data. Total size information included in the header information stored in the first field 410 corresponds to the size of data included in the first through third fields 410 through 430.

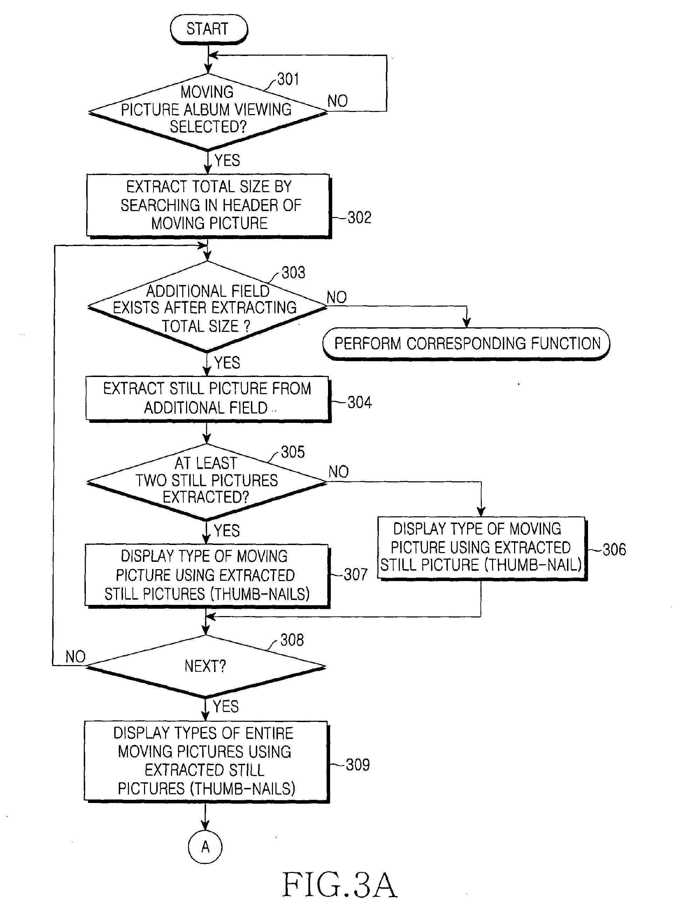

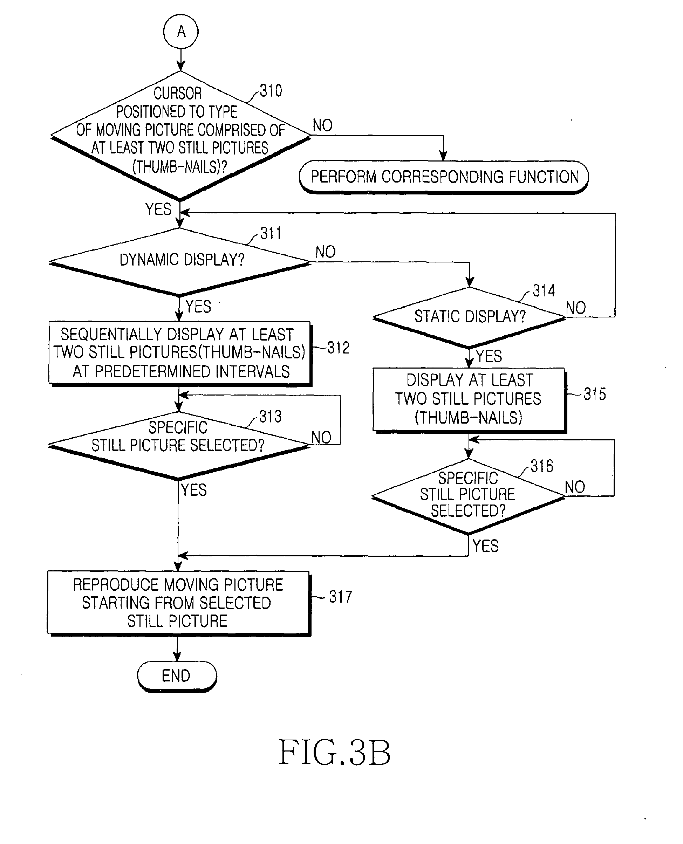

FIGs. 3A and 3B are flowcharts illustrating a process of displaying the type of a stored moving picture in the portable terminal according to an exemplary embodiment of the present invention.

Referring to FIG. 3A, when moving picture album viewing is selected in the portable terminal in step 301, the controller 110 detects the selection and determines a header of the format of a moving picture stored in the first memory 144.

Referring to FIG. 4, the controller 110 extracts total size information from header information stored in the first field 410 of the format of the moving picture in step 302. The controller 110 determines the additional field 440 added in addition to the extracted total size corresponding to the first through third fields 410 through 430. If the additional field 440 exists in step 303, the controller 110 detects the existence of the additional field 440 and extracts a still picture that is item display data from the additional field 440 in step 304.

If the number of extracted still pictures is 1 in step 305, the controller 110 detects the number and performs controlling to display the type of a moving picture stored in the first memory 144 through the extracted one still picture in step 306.

If the extracted one still picture is stored as thumb-nail image data, the controller 110 detects that fact, decodes the thumb-nail image data through the second video processor unit 111, and performs controlling to display the type of a moving picture stored in the first memory 144 by using the thumb-nail image data. However, if the extracted still picture is not stored as thumb-nail image data, the controller 110 detects that it is not, converts the extracted one still picture into thumb-nail image data through the second video processor unit 111, and performs controlling to display the type of a moving picture stored in the first memory 144 by using the converted thumb-nail image data.

If the number of extracted still pictures is greater than 2 in step 305, the controller 110 detects the number and performs controlling to display the types of moving pictures stored in the first memory 144 by using the extracted at least two still pictures in step 307.

If the extracted at least two still pictures are stored as thumb-nail image data, the controller 110 detects the fact, decodes the thumb-nail image data through the second video processor unit 111, and performs controlling to display the types of the moving pictures stored in the first memory 144 by using the thumb-nail image data in step 307. However, if the extracted at least two still pictures are not stored as thumb-nail image data, the controller 110 detects this fact, converts the extracted still pictures into thumb-nail image data through the second video processor unit 111, and performs controlling to display the moving pictures stored in the first memory 144 by using the thumb-nail image data in step 307.

Through steps 302 through 308, the controller 110 displays preferably the types of the entire moving pictures stored in the first memory 144 by using thumb-nail image data in step 309.

In FIG. 3B, when all of the moving pictures are being displayed, if a cursor is positioned to the type of a moving picture comprised of at least two still pictures (thumb-nail image data) in step 310, the controller 110 detects that fact and determines a display type of thumb-nail image data.

If the display type of thumb-nail image data is set to a dynamic display in step 311, the controller 110 detects that fact and sequentially displays the thumb-nail image data corresponding to the set display type at predetermined intervals in step 312. If specific thumb-nail image data is selected during the sequential display of the thumb-nail image data in step 313, the controller 110 detects the selection and performs controlling to reproduce the moving picture starting from the selected thumb-nail image data in step 317.

On the other hand, if the display type of thumb-nail image data is set to a static display in step 314, the controller 110 displays at least two still pictures such as thumb-nail image data in step 315. If specific thumb-nail image data is selected during the sequential display of the thumb-nail image data in step 316, the controller 110 detects the selection and performs controlling to reproduce the selected moving picture starting from the selected thumb-nail image data in step 317.

In FIGs. 2 through 3B, operations of the portable terminal having the camera module unit 140 including the camera sensor 141, the signal processor 142, the first video processor unit 143, and the first memory 144 for storing photographed image data, the controller 110 including the first video processor unit 111, and the second memory 130 for storing data under the control of the controller 110 is described. However, a portable terminal including a general camera module unit can also display the types of moving pictures by using previously stored item display data by performing the operations illustrated in FIGs. 2 through 3B under the control of a controller.

As described above, according to the present invention, the types of moving pictures stored at high resolution can be displayed by using item display data by storing the moving pictures in a portable terminal after adding the item display data to the moving pictures.

While the present invention has been shown and described with reference to certain exemplary embodiments thereof, it will be understood by those skilled in the art that various changes in form and details may be made therein without departing from the spirit and scope of the invention.

## Claims

1. A method for displaying image data in a portable terminal, the method comprising:
photographing a moving picture in a moving picture photographing mode; and
if moving picture storage is selected during photographing, adding one of frames of the photographed moving picture as item display data to the photographed moving picture and storing the photographed moving picture.

2. The method of claim 1, wherein the item display data is stored as the first frame or the last frame among the frames of the photographed moving picture.

3. The method of claim 2, wherein the still picture stored as the item display data comprises thumb-nail image data.

4. The method of claim 1, wherein the item display data is stored in an additional field added at the end of the last field of the format of the photographed moving picture.

5. A method for displaying image data in a portable terminal, the method comprising:
photographing a moving picture in a moving picture photographing mode;
if moving picture storage is selected during photographing, displaying frames of the photographed moving picture as still pictures; and
adding at least one still picture selected among the displayed still pictures as item display data to the photographed moving picture and then storing the photographed moving picture.

6. The method of claim 5, wherein the step of displaying the frames of the photographed moving picture as still pictures comprises:
if moving picture storage is selected during photographing, determining whether item display data setting is selected; and
if item display data setting is selected, displaying the frames of the photographed moving picture as still pictures.

7. The method of claim 5, wherein the item display data is stored in an additional field added at the end of the last field of the format of the photographed moving picture.

8. The method of claim 5, wherein the still picture stored as the item display data comprises thumb-nail image data.

9. A method for displaying image data in a portable terminal, the method comprising:
if moving picture album viewing is selected, extracting item display data from the format of a stored moving picture; and
displaying the types of stored moving pictures using the extracted item display data.

10. The method of claim 9, wherein the step of extracting the item display data from the format of the stored moving picture comprises:
extracting a total size by determining a header in the format of the stored moving picture;
determining whether an additional field exists in addition to the total size; and
if the additional field exists, extracting item display data from the additional field.

11. The method of claim 9, wherein the step of displaying the types of entire stored moving pictures comprises:
determining the number of extracted item display data;
if the number of extracted item display data is 1, converting the extracted item display data as single thumb-nail image data and displaying the single thumb-nail image data; and
if the number of extracted item display data is greater than 2, converting the extracted item display data into at least two thumb-nail image data and displaying the at least two thumb-nail image data.

12. The method of claim 11, wherein the step of displaying at least two thumb-nail image data comprises:
sequentially displaying the at least two thumb-nail image data at predetermined intervals; and
if specific thumb-nail image data is selected during the sequential display, reproducing the photographed moving picture starting from the selected specific thumb-nail image data.

13. The method of claim 11, wherein the step of displaying at least two thumb-nail image data comprises:
displaying the at least two thumb-nail image data; and
if specific thumb-nail image data is selected between the displayed at least two thumb-nail image data, reproducing the photographed moving picture starting from the selected specific thumb-nail image data.

14. The method of claim 9, wherein the types of moving pictures are displayed by using the item display data extracted as the thumb-nail image data.
